Europäisches Patentamt

European Patent Office

Office européen des brevets

(19)

(11) Numéro de publication : **0 228 966**
**B1**

(12) ## FASCICULE DE BREVET EUROPÉEN

(45) Date de publication du fascicule du brevet :
09.11.88

(51) Int. Cl.⁴ : **B 63 B 35/44, F 16 L 27/08**

(21) Numéro de dépôt : 86402914.5

(22) Date de dépôt : 23.12.86

(54) Dispositif pour éviter la torsion d'une ligne flexible.

(30) Priorité : 30.12.85 FR 8519428

(43) Date de publication de la demande :
15.07.87 Bulletin 87/29

(45) Mention de la délivrance du brevet :
09.11.88 Bulletin 88/45

(84) Etats contractants désignés :
ES FR GB NL

(56) Documents cités :
FR-A- 2 011 994
GB-A- 2 099 894
US-A- 3 285 630
US-A- 3 956 742
US-A- 3 980 038

(73) Titulaire : **INSTITUT FRANCAIS DU PETROLE**
**4, Avenue de Bois-Préau**
**F-92502 Rueil-Malmaison (FR)**

(72) Inventeur : **Joubert, Philippe**
**1, allée des Peupliers Les loges en Josas**
**F-78350 Jouy en Josas (FR)**
Inventeur : **Falcimaigne, Jean**
**19, avenue de Chevreul**
**F-92270 Bois Colombes (FR)**

(74) Mandataire : **Aubel, Pierre et al**
**Institut Français du Pétrole Département Brevets 4,**
**avenue de Bois Préau**
**F-92502 Rueil-Malmaison (FR)**

Jouve, 18, rue St-Denis, 75001 Paris, France

**0 228 966**

**Description**

La présente invention concerne un dispositif pour éviter la torsion d'une ligne flexible, notamment d'une conduite flexible.

La présente invention est notamment applicable à la production de produits pétroliers en mer.

Les liaisons fond/surface des systèmes flottants de production utilisent des conduites flexibles « flexibles » disposées en chaînette, cette configuration permettant de s'accommoder des mouvements horizontaux et verticaux du support flottant. Lorsque ce support est un navire pétrolier ou une plateforme semi-submersible, un joint tournant lui permet de tourner autour de la tête du flexible.

Si le joint tournant est parfait (sans frottement) et si le pétrolier reste dans le plan vertical du flexible, aucune torsion n'est induite dans le flexible.

Par contre, si le joint tournant n'est pas parfait, ce qui est pratiquement toujours le cas (en particulier dans le cas des joints tournants haute pression et dans le cas de mouvements hors du plan indiqué précédemment), une torsion apparaît dans le flexible, même si le pétrolier conserve un cap constant.

Ces torsions sont préjudiciables à la longévité de la ligne, notamment du fait des usures qu'elles engendrent par frottement des armures les unes sur les autres. De plus ces torsions provoquent des réactions qui peuvent être néfastes pour les points de fixation des extrémités de la ligne flexible et plus généralement pour les supports de ces points de fixation.

Le dispositif selon la présente invention permet d'éviter la torsion du flexible, ce qui diminue les contraintes dans les couches d'armures constituant généralement les conduites flexibles et réduit le gauchissement de la conduite flexible et par suite les flexions.

Ainsi la présente invention concerne un dispositif évitant la torsion d'une ligne flexible ayant deux extrémités dont l'une est reliée à un joint tournant comportant deux parties, l'une de ces deux parties étant solidaire de ladite extrémité, l'autre partie dudit joint tournant étant solidaire d'une installation mobile par rapport à l'autre extrémité de ladite ligne flexible. Un tel dispositif est connu du FR-A-2011994. Le dispositif selon l'invention est caractérisé en ce qu'il comporte des moyens de mise en rotation de l'une des parties dudit joint tournant relativement à l'autre.

Les moyens de mise en rotation pourrait comporter un moteur asservi à un système de pilotage automatique tenant compte des caractéristiques géométriques de la ligne flexible.

Le dispositif selon la présente invention pourra comporter des moyens de détermination de la variation de la position relative des deux extrémités de la ligne flexible.

Lesdits moyens de détermination de la variation de position relative pourront comporter, au moins deux inclinomètres, au moins un sondeur directif et au moins un compas.

Les moyens de détermination de la variation de position relative pourront comporter au moins trois balises, éventuellement du type acoustique.

Selon une autre variante, le dispositif selon la présente invention pourra comporter des moyens adaptés à mesurer la torsion de ladite ligne flexible.

Ces moyens pourront comporter des jauges de contrainte et/ou des accéléromètres placés sur la ligne flexible.

On ne sortira pas du cadre de la présente invention si les extrémités de ladite ligne flexible font des angles sensiblement égaux par rapport à la direction verticale au voisinage de leur point de connexion, les sens de ces extrémités considérés, suivant une direction verticale, étant opposés, en partant du point de connexion et en se dirigeant vers l'autre extrémité.

Les moyens de détermination de la variation de la position relative desdites deux extrémités pourront être adaptés à mesurer les angles :

Thêta : formé par la projection orthogonale sur un plan horizontal (A, B', A') du point (A, A') de connexion de l'extrémité (11) de la ligne flexible à ladite installation avant et après le déplacement de ladite installation flottante et du point (B) de connexion entre l'installation immergée et l'autre extrémité de la ligne flexible, le sommet dudit angle étant constitué par la projection (B') de ce dernier point,

Alpha : formé par l'extrémité (11) de la ligne flexible solidaire de ladite installation et la direction verticale,

Bêta : formé par l'autre extrémité (25) de la ligne flexible, h : angle de variation du cap du navire. Les moyens de mise en rotation pourront être adaptés à faire tourner lesdites parties du joint tournant l'une par rapport à l'autre d'un angle gamma égal à :

$$\text{Gamma} = \text{Thêta}(1 + (\cos(\text{Bêta}))/(\cos(\text{Alpha}))) + h$$

où cos désigne la fonction cosinus.

La présente invention sera mieux comprise et ses avantages apparaîtront plus clairement à la description qui suit d'exemples particuliers, nullement limitatifs, illustrés par les figures ci-annexées parmi lesquelles :

— la figure 1 représente une ligne flexible joignant une installation immergée à une installation de surface,

— la figure 2 illustre un déplacement de l'installation de surface sans qu'il y ait pour autant

2

changement de cap de cette installation,

— les figures 3 et 4 illustrent deux modes différents de fixation de la ligne flexible à l'installation immergée.

— la figure 5 montre un exemple de mode de réalisation du dispositif selon la présente invention.

— les figures 6 et 7 définissent des angles géométriques servant à caractériser le positionnement de la ligne flexible, .

— la figure 8 montre une méthode de détermination de la variation de position de l'installation de surface, .

— les figures 9 et 10 illustrent des configurations particulières de la ligne flexible, et

— la figure 11 montre l'application de la présente invention dans le cas où l'on utilise une tourelle d'amarrage. pour amarrer l'installation de surface.

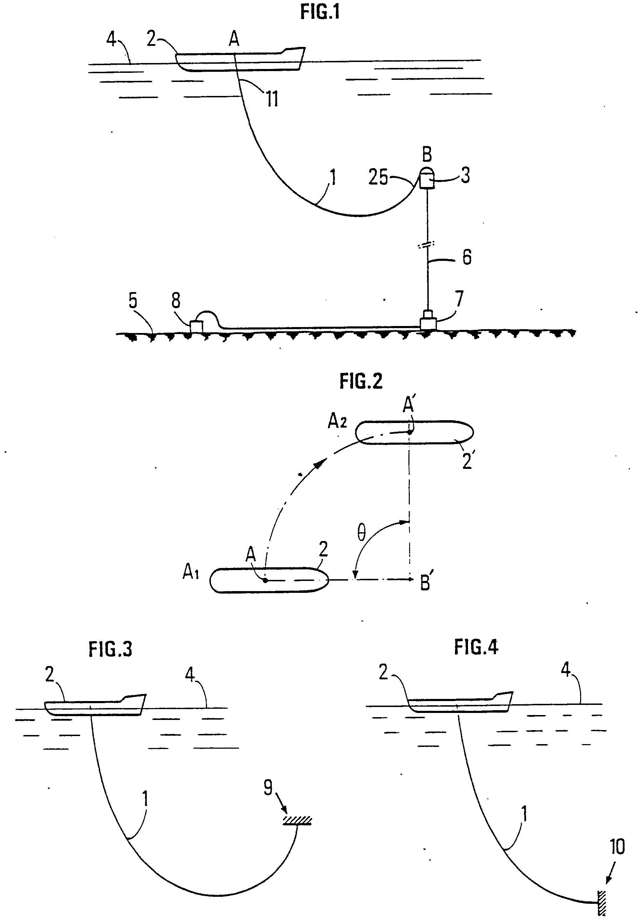

La référence 1 de la figure 1 désigne une ligne flexible reliant une installation flottante 2 telle un navire à une installation immergée 3. La référence A schématise le point de connexion entre le navire 2 et une extrémité 11 de la ligne flexible 1. La référence B schématise le point de connexion entre l'installation immergée telle une bouée 3 et une autre extrémité 25 de la ligne flexible 1.

Par la ligne flexible on entend toute canalisation pouvant comporter un ou plusieurs conduits servant par exemple au transfert d'un effluent pétrolier, un ou plusieurs câbles électriques, ou des fibres optiques etc...

Sur la figure 1, ainsi que sur les autres figures, la référence 4 désigne la surface de l'eau et la référence 5 le fond de l'eau.

L'installation immergée 3 de la figure 1 peut être une bouée connectée à une colonne montante 6 ancrée par une embase 7 au fond de l'eau 5. Cette colonne montante 6 peut servir à l'acheminement de la production d'un ou de plusieurs puits pétroliers immergés 8.

Comme cela a été dit dans la partie introductive de la présente description certains mouvements du navire 2 peuvent induire des contraintes de torsion dans la ligne flexible 1, par exemple si le navire passe de la position A1 à la position A2 indiquées à la figure 2, tel que l'angle théta formé par :

— le point A de connexion entre l'extrémité du flexible et le navire 2 considéré dans la position A1,

— le point B' qui est la projection, sur un plan horizontal contenant le navire, du point B de connexion entre l'autre extrémité de la ligne flexible 1 et l'installation immergée, et

— le point A' de connexion entre l'extrémité du flexible et le navire 2 considéré dans la position A2, soit égal à un angle donné par exemple 90° la torsion de la ligne flexible peut atteindre le double de cet angle soit 180°, alors que le navire ne change pas de cap.

L'angle de torsion de la ligne flexible d'une valeur de 180° pour un angle théta de 90° correspond au cas où la ligne flexible est encastrée sur l'installation immobile de telle manière que son extrémité soit sensiblement verticale et que la ligne flexible ait une forme de même convexité. Ceci est représenté à la figure 3. La référence 9 sur cette figure 3 schématise un encastrement. Le cas de la figure 4 représente un encastrement 10 de l'extrémité de la ligne flexible liée à l'installation immergée, tel que cette extrémité appartienne à un plan horizontal. Un tel encastrement induirait une torsion de la ligne flexible de 90° pour un angle théta de 90°. Bien entendu ces angles de torsion. de 180° et 90° supposent que l'extrémité de la ligne flexible liée au navire soit immobile en rotation.

La présente invention permet d'éviter la torsion de la ligne flexible, ce qui diminue les contraintes dans les couches d'armure, et de réduire le gauchissement des lignes généralement utilisées dans le domaine de la production marine de produits pétroliers.

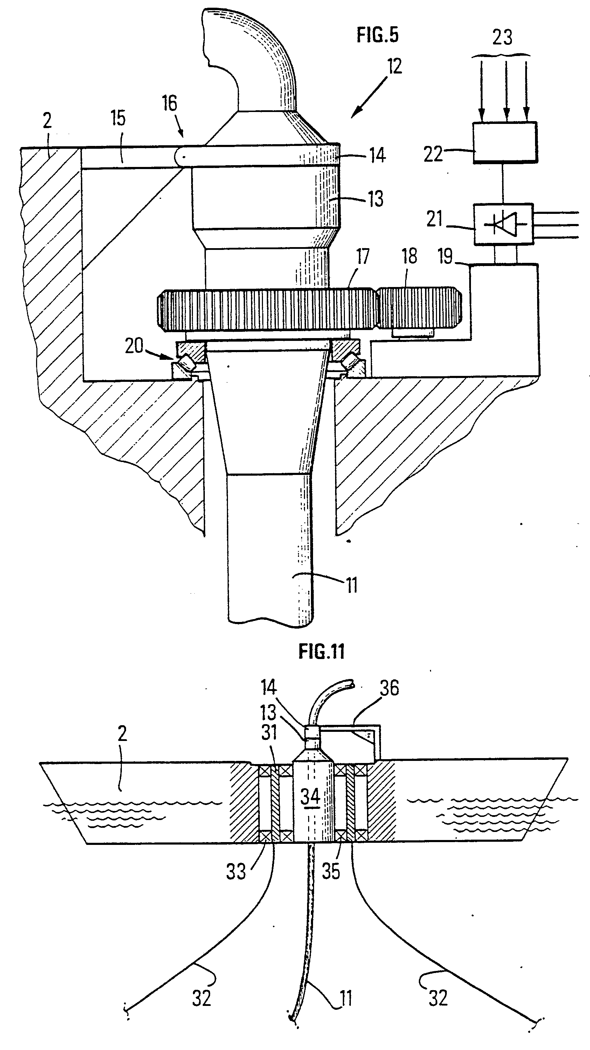

La figure 5 représente un mode de mise en œuvre selon la présente invention.

L'extrémité 11 de la ligne flexible 1 est connectée à l'installation flottante 2 grâce à un joint tournant 12 comportant deux parties 13 et 14, ces deux parties pouvant tourner l'une par rapport à l'autre.

Sur la figure 5 la référence 13 désigne la partie du joint tournant solidaire en rotation de l'extrémité 11 de la ligne flexible et la référence 14 la partie du joint tournant solidaire en rotation de l'installation flottante 2. Ceci peut être réalisé par un bras de liaison 15 qui peut être d'une part soudé à l'installation flottante 2 et d'autre part fixé à la partie 14 du joint tournant par une bride 16.

La partie 13 du joint tournant solidaire de la ligne flexible peut être entraînée en rotation par une roue dentée 17. Cette roue dentée coopère avec un pignon denté 18 qui peut être entraîné en rotation par un moteur 19. Ce moteur peut être électrique, hydraulique etc.

La partie 13 du joint tournant peut reposer sur des roulements 20 qui permettent le mouvement en rotation de cette partie 12 du joint tournant relativement à l'installation flottante 2.

Comme cela a été dit précédemment, le moteur 19 d'entraînement du pignon 18 peut être électrique et son alimentation en énergie peut être effectuée par un système électronique de puissance 21 qui peut être lui-même commandé par un dispositif de régulation 22, éventuellement électronique.

Le système de régulation électronique pourra comporter un calculateur tel que ceux généralement utilisés pour effectuer des tâches de régulation, notamment ceux utilisés sur les navires à positionnement dynamique.

Le système de régulation 22 reçoit les informations symbolisées par les flèches 23 (figure 5), permettant de connaître ou de déduire l'état de contrainte auquel est soumis la ligne flexible 1.

Le système de régulation 22 agit sur le système d'alimentation 21, afin d'alimenter le moteur 19 pour que celui-ci entraîne le pignon 18 et la roue dentée 17, de manière à provoquer la rotation de l'extrémité 11 de la ligne flexible, cette rotation étant d'une amplitude angulaire suffisante et dans le sens qui convient pour réduire la torsion de la ligne flexible.

Un exemple de détermination de l'amplitude de rotation qu'il convient de donner à la partie du joint tournant solidaire de l'extrémité 11 de la ligne flexible est donné ci-après.

La variation d'angle de torsion T dans une ligne flexible encastrée aux deux extrémités est donnée par la formule :

$$T = \text{Thêta} [\cos(\text{Alpha}) + \cos(\text{Bêta})] - \text{Gamma} [\cos(\text{Alpha})]$$

où :

cos : désigne la fonction cosinus

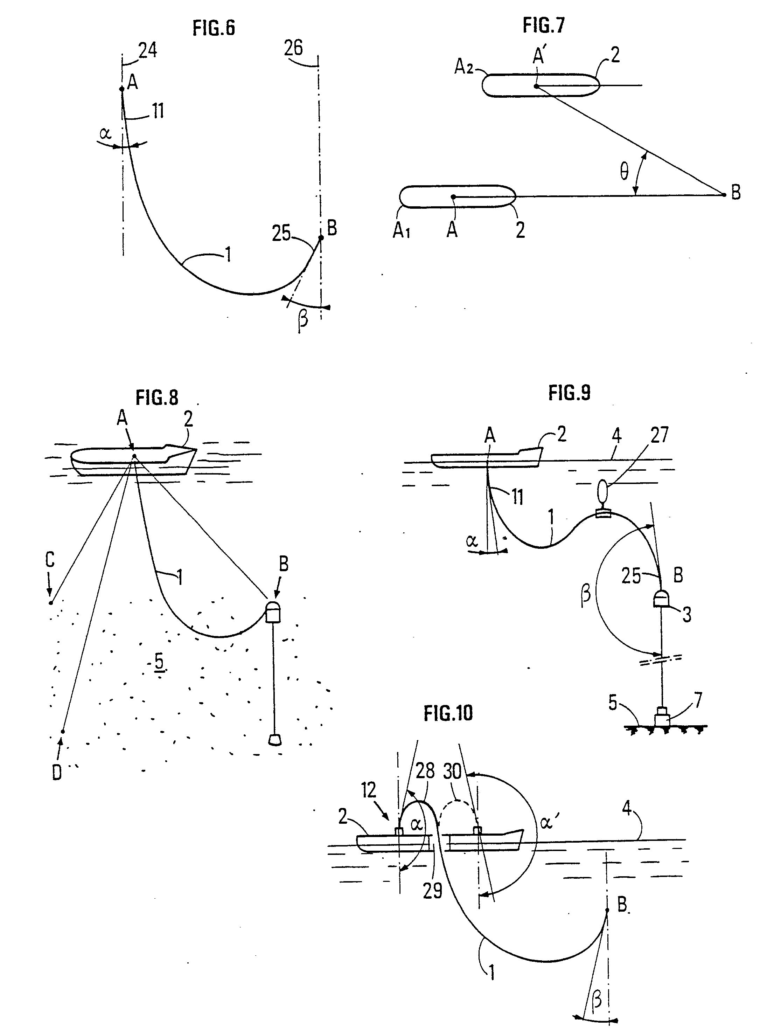

Thêta : l'angle formé dans un plan horizontal, par les points de connexion de l'extrémité 11 de la ligne flexible, A et A', considérés avant et après le déplacement du navire (voir figure 7) et par le point B' projection sur le plan horizontal du point B de connexion entre l'installation immergée et l'autre extrémité de la ligne flexible.

Gamma : l'angle formé par les deux parties du joint tournant qui est supposé nul à la position de départ A1 si la torsion est également nulle pour cette position de départ.

Alpha : l'angle formé par l'extrémité 11 de la ligne flexible avec un demi-axe vertical 24 passant par le point A de connexion entre cette extrémité 11 et l'installation flottante non représentée sur la figure 6.

Bêta : l'angle formé par l'autre extrémité 25 de la ligne flexible 1 avec un demi-axe vertical de même orientation que celui utilisé pour définir l'angle Alpha passant par le point B de connexion entre cette extrémité 25 et l'installation immergée (non représentée sur la figure 6).

Les différents angles Alpha, Bêta, Thêta sont figurés sur les figures par leur représentation en caractères grecs.

Ainsi pour un déplacement d'un angle Thêta indiqué à la figure 7, avec un cap constant du navire, il faut tourner les deux parties du joint tournant d'un angle Gamma pour annuler la variation de torsion de la ligne flexible provoquée par ce déplacement.

Gamma est donné par :

$$\text{Gamma} = \text{Thêta}(1 + (\cos(\text{Bêta}))/(\cos(\text{Alpha})))$$

Une variation de cap h du navire au cours du déplacement de ce dernier sera compensée par une rotation complémentaire des deux parties du joint tournant. D'une manière générale Gamma est égal à :

$$\text{Gamma} = \text{Thêta}(1 + (\cos(\text{Bêta}))/(\cos(\text{Alpha}))) + h$$

La fonction du dispositif de détermination de la rotation gamma du joint tournant consiste à mesurer les valeurs des angles, Alpha, Bêta, Thêta et h, à les introduire dans un calculateur qui détermine l'angle Gamma en fonction de l'équation générale donnée ci-dessus et à commander au moteur d'entraîner le joint tournant de la valeur appropriée de l'angle Gamma.

Ce dispositif pourra comporter des inclinomètres pour mesurer les angles Alpha et Bêta, un sondeur directif permettra d'accorder à la mesure de l'angle Thêta et un compas pour mesurer l'angle h.

Ces organes étant bien connus de l'homme de l'art ne seront pas décrits avec plus de détails.

Une variante avantageuse consiste à disposer deux balises C et D (voir figure 8) sur le fond de l'eau 5, de façon que le plan ACD soit distinct du plan vertical passant par AB et une troisième balise au point B.

Dans ce cas, la mesure des distances AB, AC et AD fournit à chaque instant la position du navire A par rapport au point B.

Les balises placées aux points B, C et D peuvent être des balises acoustiques.

Selon un autre mode de réalisation de la présente invention, on pourra mesurer directement la torsion de la ligne flexible, par exemple au moyen de jauges de contraintes collées sur la ligne flexible et transmettre les signaux fournis par cette jauge de contrainte au système de régulation 22. On ne sortira du cadre de la présente invention en utilisant simultanément plusieurs modes de réalisation de manière à en augmenter la fiabilité.

La figure 9 présente une configuration de la ligne flexible qui ne nécessite pas une rotation relative des deux parties du joint tournant l'une par rapport à l'autre lorsque le navire garde un cap constant. Selon cette configuration la ligne flexible a la forme d'un S et l'extrémité 11 de cette ligne fixée à l'installation flottante fait un angle par rapport à la direction verticale égal à celui que fait l'extrémité 25 de la ligne flexible 1 fixée à l'installation immergé en B avec la direction verticale.

Les extrémités 11 et 25 étant orientées en partant de leur point de connexion, respectivement A et B, dans des sens opposés considérés suivant la direction verticale, les angles Alpha et Bêta tels que définis antérieurement étant supplémentaires.

La forme de S est réalisée par exemple au moyen d'une bouée 27 ou de flotteurs répartis sur une portion de longueur de la ligne flexible.

La figure 10 représente une autre configuration en S selon laquelle l'une des boucles 28 du S est effectuée sur l'installation flottante 2 après que la ligne flexible 1 ait traversé un passage 29 aménagé dans le navire. Il est important que la ligne flexible puisse être libre dans ce passage 29 et qu'elle ne soit pas guidée. Sur cette figure on a représenté une autre configuration en pointillé 30 pour laquelle la ligne flexible fait une deuxième boucle 30 sensiblement dans le sens opposé de la boucle 28 de la portion en forme de S du flexible ainsi, la configuration de la ligne flexible a la forme d'un C.

On pourra utiliser des écubiers sur l'installation flottante afin de faciliter la mise en forme de la boucle 28 ou 30.

La figure 11 montre l'application de la présente invention dans le cas où on utilise une tourelle 31 d'amarrage du navire 2.

La tourelle 31 est ancrée au fond marin par des lignes 32.

Le navire peut tourner autour de la tourelle 31 grâce à des moyens de roulement 33.

A l'intérieur de la tourelle 31 se trouve un corps 34 solidaire de l'extrémité 11 de la ligne 1, ce corps supporte éventuellement la partie 13 du joint tournant solidaire de l'extrémité 11 de la ligne flexible 1.

Grâce à des moyens de roulement 35 le corps 34 est monté libre en rotation dans la tourelle 34 sur la figure 11.

De la même manière que sur la figure 5 la référence 14 désigne la partie du joint tournant solidaire en rotation du navire 2, par exemple par un bras 36.

La partie 13 du joint tournant pourra être commandée en rotation par des moyens similaires à ceux décrits précédemment en relation avec la figure 5.

Ainsi la présente invention s'applique au cas où l'on utilise une tourelle de la même manière que si celle-ci n'était pas présente.

Le mode de réalisation illustré par la figure 11 pourra comporter des moyens permettant de désolidariser le corps 34 de la tourelle 34, ceci notamment dans le cadre de procédure d'urgence destinée à éviter des dommages à la ligne flexible.

Dans ce cas le corps 34 pourra comporter une bouée permettant de maintenir entre deux eaux après déconnexion, l'extrémité 11 de la ligne flexible, éventuellement avec la partie 13 du joint tournant.

## Revendications

1. Dispositif évitant la torsion d'une ligne flexible (1) ayant deux extrémités (11, 25) dont l'une est reliée à un joint tournant (12) comportant deux parties, l'une de ces deux parties (13) étant solidaire de ladite extrémité (11), l'autre partie (14) dudit joint tournant étant solidaire d'une installation mobile (2) par rapport à l'autre extrémité (25) de ladite ligne flexible, caractérisé en ce qu'il comporte des moyens (17, 18, 19) de mise en rotation de l'une des parties dudit joint tournant relativement à l'autre.

2. Dispositif selon la revendication 1, caractérisé en ce que lesdits moyens de mise en rotation comportent un moteur (19) asservi à un système de pilotage automatique (21, 22).

3. Dispositif selon l'une des revendications 1 ou 2, caractérisé en ce qu'il comporte des moyens de détermination de la variation de la position relative desdites deux extrémités (11, 25) de ladite ligne.

4. Dispositif selon la revendication 3, caractérisé en ce que lesdits moyens de détermination de la variation de position relative comportent au moins deux inclinomètres, au moins un sondeur directif et au moins un compas.

5. Dispositif selon la revendication 3, caractérisé en ce que lesdits moyens de détermination de la variation de position relative comportent au moins trois balises.

6. Dispositif selon l'une des revendications 1 ou 2, caractérisé en ce qu'il comporte des moyens adaptés à mesurer la torsion de ladite ligne flexible (1).

7. Dispositif selon la revendication 6, caractérisé en ce que lesdits moyens adaptés à mesurer la torsion de ladite ligne flexible comportent des jauges de contrainte.

8. Dispositif selon la revendication 1, caractérisé en ce que lesdites extrémités en ce que ladite ligne flexible font des angles sensiblement égaux par rapport à la direction verticale, au voisinage de leur point de connexion et en ce que les sens de ces extrémités considérés, suivant une direction verticale, sont opposés, en partant du point de connexion et en se dirigeant vers l'autre extrémité.

9. Dispositif selon la revendication 3, caractérisé en ce que lesdits moyens de détermination de la variation de la position relative desdites deux extrémités sont adaptés à mesurer les angles :

Thêta : formé par la projection orthogonale sur un plan horizontal (A, B', A') du point (A, A') de connexion de l'extrémité (11) de la ligne flexible à ladite installation avant et après le déplacement de ladite installation flottante et du point (B) de connexion entre l'installation immergée et l'autre extrémité de la ligne flexible, le sommet dudit angle étant constitué par la projection (B') de ce dernier point,

Alpha : formé par l'extrémité (11) de la ligne flexible solidaire de ladite installation et un demi-axe vertical,

Bêta : formé par l'autre extrémité (25) de la ligne flexible, avec un demi-axe vertical de même orientation que celui utilisé pour définir l'angle Alpha.

h : angle de variation du cap du navire, lesdits moyens de mise en rotation étant adaptés à faire tourner desdites parties du joint tournant l'une par rapport à l'autre d'un angle gamma égal à :

$$\text{Gamma} = \text{Thêta}(1 + (\cos(\text{Bêta})/\cos(\text{Alpha}))) + h$$

où cos désigne la fonction cosinus.

10. Application du dispositif selon l'une des revendications 1 à 9 à la connexion par ligne flexible entre deux installations marines.

## Claims

1. Device preventing torsion of a flexible line (1) having two ends (11, 25) one of which is connected to a turning joint (12) having two parts, one of these two parts (13) being locked to said end (11), the other part (14) of said turning joint being locked to an installation (2) which can move in relation to the other end (25) of said flexible line, characterized in that it comprises means (17, 18, 19) for rotating one of the parts of said turning joint relative to the other.

2. Device as in claim 1, characterized in that said rotating means comprise a motor (19) controlled by an automatic control system (21, 22).

3. Device as in one of claims 1 or 2, characterized in that it comprises means for determining the variation in the relative position of said two ends (11, 25) of said line.

4. Device as in claim 3, characterized in that said means for determining the variation in relative position comprise at least two inclinometers, at least one directional sounder and at least one compass.

5. Device as in claim 3, characterized in that said means for determining the variation in relative position comprise at least three beacons.

6. Device as in one of claims 1 or 2, characterized in that it comprises means adapted to measure the torsion of said flexible line (1).

7. Device as in claim 6, characterized in that said means adapted to measure the torsion of said flexible line comprise strain gauges.

8. Device as in claim 1, characterized in that said ends of said flexible line form substantially equal angles in relation to the vertical in the vicinity of their point of connection and in that the directions of these ends considered in a vertical direction are opposite moving from the point of connection towards the other end.

9. Device as in claim 3, characterized in that said means for determining the variation in the relative position of said two ends are adapted to measure the angles :

Theta : formed by the orthogonal projection in a horizontal plane (A, B', A') of the point (A, A') of connection of the end (11) of the flexible line to said installation before and after the movement of said floating installation and the point (B) of connection between the submerged installation and the other end of the flexible line, the apex of said angle being constituted by the projection (B') of this last point ;

Alpha : formed by the end (11) of the flexible line locked to said installation and a vertical semi-axis ;

Beta : formed by the other end (25) of the flexible line with a vertical semi-axis of the same orientation as that used to define the angle alpha ;

h : the angle of variation of the heading of the vessel, said rotating means being adapted to turn said parts of the turning joint one in relation to the other through an angle gamma equal to :

$$\text{Gamma} = \text{Theta}(1 + (\cos(\text{Beta}))/(\cos(\text{Alpha}))) + h$$

in which cos denotes the cosine function.

10. Application of the device as in one of claims 1 to 9 to the flexible line connection between two marine installations.

## Patentansprüche

1. Vorrichtung zur Vermeidung der Torsion einer flexiblen Leitung (1) mit zwei Enden (11, 25), von dem das eine mit einer Drehverbindung (12) mit zwei Teilen verbunden ist, wobei das eine dieser Teile (13) fest mit diesem Ende (11), der andere Teil (14) dieser Drehverbindung fest mit einer bezogen auf das andere Ende (25) der flexiblen Leitung beweglichen Installation (2) verbunden ist, dadurch gekennzeichnet, daß sie Einrichtungen (17, 18, 19) zum Indrehungversetzen eines der Teile der Drehverbindung relativ zum anderen umfaßt.

2. Vorrichtung nach Anspruch 1, dadurch gekennzeichnet, daß die Einrichtungen zum Indrehungversetzen einen einem selbsttätigen Hilfssteuersystem (21, 22) zugeordneten Motor (19) umfassen.

3. Vorrichtung nach einem der Ansprüche 1 oder 2, dadurch gekennzeichnet, daß sie Einrichtungen zur Bestimmung der Veränderung der relativen Lage dieser beiden Enden (11, 25) dieser Leitung umfaßt.

4. Vorrichtung nach Anspruch 3, dadurch gekennzeichnet, daß diese Einrichtungen zur Bestimmung der Veränderung der relativen Lage wenigstens zwei Neigungsmeßgeräte, wenigstens ein Richtungslot und wenigstens einen Kompaß umfassen.

5. Vorrichtung nach Anspruch 3, dadurch gekennzeichnet, daß diese Einrichtungen zur Bestimmung der Veränderung der relativen Lage wenigstens drei Baken aufweisen.

6. Vorrichtung nach einem der Ansprüche 1 oder 2, dadurch gekennzeichnet, daß sie Einrichtungen umfaßt, die so ausgebildet sind, daß sie die Torsion oder Verdrehung dieser flexiblen Leitung (1) messen.

7. Vorrichtung nach Anspruch 6, dadurch gekennzeichnet, daß diese zum Messen der Torsion der flexiblen Leitung eingerichteten Einrichtungen Dehnungsmeßstreifen umfassen.

8. Vorrichtung nach Anspruch 1, dadurch gekennzeichnet, daß die Enden dieser flexiblen Leitung im wesentlichen gleiche Winkel bezogen auf die Vertikalrichtung benachbart ihrem Verbindungspunkt aufweisen und daß die Richtungen dieser betrachteten Enden längs einer Vertikalrichtung, ausgehend vom Verbindungspunkt und in Richtung gegen das andere Ende einander entgegengesetzt sind.

9. Vorrichtung nach Anspruch 3, dadurch gekennzeichnet, daß die Einrichtungen zum Bestimmen des Veränderns der relativen Lage dieser beiden Enden so ausgebildet sind, daß die folgenden Winkel gemessen werden :

Theta : gebildet durch die orthogonale Projektion, auf eine Horizontalebene (A, B', A) des Punktes (A, A') der Verbindung des Endes (11) der flexiblen Leitung mit dieser Installation vor und nach der Bewegung der schwimmenden Installation und des Verbindungspunktes (B) zwischen der getauchten Installation und dem anderen Ende der flexiblen Leitung, wobei die Spitze dieses Winkels gebildet wird durch die Projektion (B') des letztgenannten Punktes,

Alpha : gebildet durch das Ende (11) der flexiblen fest mit dieser Installation verbundenen Leitung und einer vertikalen Halbachse,

Beta : gebildet durch das andere Ende (25) der flexiblen Leitung, mit einer vertikalen Halbachse gleicher Orientierung wie der zur Definition des Winkels Alpha verwendeten,

h : der Winkel zur Veränderung des Schiffskurses, wobei diese zum Indrehungversetzen dienenden Einrichtungen so ausgebildet sind, daß sie diese Teile der Drehverbindung bezüglich einander um einen Winkel Gamma gleich :

$$Gamma = Theta(1 + (cos(Beta))/(cos(Alpha))) + h$$

wo cos die Cosinusfunktion bedeutet, zur Drehung veranlassen.

10. Anwendung der Vorrichtung nach einem der Ansprüche 1 bis 9 auf die Verbindung — vermittels flexibler Leitung — zwischen zwei Meeresinstallationen.

**FIG.1**

**FIG.2**

**FIG.3**

**FIG.4**

**0 228 966**

**FIG.5**

**FIG.11**

2

FIG.6

FIG.7

FIG.8

FIG.9

FIG.10

3